# EUROPÄISCHE PATENTSCHRIFT

(11) **EP 0 791 818 B1**
(45) Veröffentlichungstag und Bekanntmachung des Hinweises auf die Patenterteilung: **28.04.1999**
(21) Anmeldenummer: 97100620.0
(22) Anmeldetag: 16.01.1997
(51) Int. Cl.: G01N 21/17, G01B 11/06, G01B 11/02, G01N 25/72

(54) **Verfahren und Vorrichtung zum photothermischen Prüfen von Werkstücken**
Method and device for photothermal testing a workpiece
Méthode et appareil pour l'examen photothermique d'une pièce à usiner

(30) Priorität: 21.02.1996 DE 19606453
(43) Veröffentlichungstag der Anmeldung: 27.08.1997
(73) Patentinhaber: WAGNER INTERNATIONAL AG, 9450 Altstätten (CH)
(72) Erfinder: Prekel, Helmut, 88131 Lindau (DE); Adams, Horst, Dr., 88149 Nonnenhorn (DE)
(74) Vertreter: Liesegang, Roland, Dr.-Ing.

(56) Entgegenhaltungen:
- DE-A- 3 631 652
- DE-A- 4 015 893
- DE-A- 4 343 076
- US-A- 4 884 888

## Beschreibung

Die Erfindung betrifft ein Verfahren zum photothermischen Prüfen von Werkstücken, bei dem ein elektromagnetischer Anregungsstrahl auf einen gewünschten Meßpunkt einer Werkstückoberfläche gerichtet wird und bei dem die von dem Anregungsstrahl im Meßpunkt erzeugte Wärme in Form von Wärmestrahlung mittels einer Meßvorrichtung erfaßt und ausgewertet wird. Die Erfindung betrifft ferner eine Vorrichtung zum photothermischen Prüfen von Werkstücken, welche eine Anregungsquelle zum Abgeben eines elektromagnetischen Anregungsstrahls, eine optische Einrichtung, welche den Anregungsstrahl auf einen Meßpunkt auf der Werkstückoberfläche richtet, und eine Meßvorrichtung zum Erfassen der von dem Werkstück abgegebenen Wärmestrahlung aufweist.

Die photothermische, berührungslose und zerstörungsfreie Materialprüfung mittels einer thermischen Anregung von Oberflächen durch intensitätsmodulierte Strahlung und Auswertung des zeitlichen Verlaufs der von der Oberfläche abgegebenen Wärmestrahlung ist ein seit einigen Jahren bewährtes Verfahren. Das zugrundeliegende Prinzip, welches auch als photothermische Radiometrie bekannt ist, basiert auf der Erzeugung von Temperaturwellen in einem Prüfgegenstand, welche sich in einer für die Materialbeschaffenheit des Prüfgegenstandes charakteristischen Weise ausbreiten und ähnlich wie Ultraschallwellen an thermischen Inhomogenitäten, wie Schichtgrenzen, Delaminationen, Rissen, Poren etc., gestreut bzw. reflektiert werden. Die reflektierten bzw. gestreuten Anteile der Temperaturwelle interferieren mit der Ursprungs- oder Anregungswelle und bilden, zum Teil auch nach Mehrfachreflexionen bzw. -streuungen, einen Summenvektor der Temperaturwelle. Dieser beinhaltet als Meßinformation über das zu prüfende Werkstück einen Vektorbetrag sowie eine Phase, wobei der Vektorbetrag wegen seiner starken Abhängigkeit von äußeren Faktoren, wie Meßabstand und Einstrahlwinkel, welche bei einer industriellen Anwendung oft nicht präzise einstellbar sind, kaum verwertbar ist. Die Phase ist von diesen Parametern, und sogar von der Leistung der intensitätsmodulierten Anregungsstrahlung, weitgehend unabhängig, so daß sie verläßlich ausgewertet werden kann. Aufgrund der Phasenverschiebung der vom Werkstück emittierten Infrarot-Wärmestrahlung relativ zur eingestrahlten Anregungsstrahlung kann die Beschaffenheit, insbesondere die Dicke, einer Werkstückoberfläche ermittelt werden.

Es ist zweckmäßig, die Anregungsstrahlung so zu wählen, daß ihre Wellenlänge(n) außerhalb des Empfindlichkeitsbereiches des Infrarotdetektors liegt (liegen). Dadurch wird vermieden, daß gestreute und/oder reflektierte Anregungsstrahlung im Detektor ein Störsignal erzeugt.

Die photothermische Radiometrie ist besonders für Werkstücke geeignet, welche thermisch dünn sind, wie Oberflächenbeschichtungen und Werkstückschutzschichten, weil dann die Interferenzen der Temperaturwellen am deutlichsten auftreten. Weitere theoretische Aspekte zu der photothermischen Radiometrie finden sich in C.A. Bennett, Jr. und R.R. Patty "Thermal Wave Interferometry: A Potential Application of the Photoacoustic Effect", Applied Optics, Band 21, Nr. 1, 1. Januar 1982, Seiten 49 bis 54.

Eine Vorrichtung zur zerstörungsfreien Materialprüfung ist aus der EP-A-0 609 193 bekannt. Hier wird ein modulierter Laserstrahl oder ein kontinuierlicher Laserstrahl, der mit einem mechanischen Unterbrecher moduliert (periodisch unterbrochen) wird, auf eine Prüfoberfläche gerichtet, so daß auf dieser eine periodische Erwärmung herbeigeführt wird, welche mit einem Infrarotdetektor erfaßt, umgewandelt und zur Auswertung einem Rechner zugeführt wird, um die Porösität von Reibbelägen zu bestimmen.

Eine weitere Anordnung zur photothermischen Materialprüfung bzw. zur Schichtdickenmessung lehrte die DE-A-36 31 652. Fig. 1 dieser Druckschrift zeigt einen Heizstrahler, dem ein Modulator nachgeschaltet ist, so daß intensitätsmodulierte Strahlung, in diesem Fall über eine Faser, der Prüfoberfläche zugeführt wird.

Die photothermische Meßtechnik eignet sich besonders für die Schichtdickenmessung von nicht eingebrannten Pulverschichten auf Werkstücken, bevor diese in einen Brennofen eingebracht werden. Für solche Messungen können insbesondere Infrarot-Laser, z.B. CO₂-Infrarotlaser, eingesetzt werden.

Es ist eine Vorrichtung zur photothermischen Prüfung von Werkstücken bekannt, bei der die (unsichtbare) Anregungsstrahlung und die (unsichtbare) Meßstrahlung kollinear ausgerichtet sind. (DE 43 43 076 A1)

Eine Schwierigkeit bei den Verfahren und Vorrichtungen zum photothermischen Prüfen von Werkstücken ist, daß sowohl die anregende (Laser-)Strahlung als auch die vom Pulver ausgehende Wärme (Infrarot-)Strahlung, welche als Meßsignal dient, im infraroten Spektralbereich liegen und somit für das menschliche Auge nicht sichtbar sind. Es kann also vom Benutzer nicht festgestellt werden, wo genau der Anregungsstrahl auf das Werkstück trifft. In vielen Fällen ist aber eine genaue Lokalisierung des Meßpunktes auf dem Werkstück erwünscht.

Aus der DE-A-40 15 893 ist eine Vorrichtung zum photothermischen Prüfen von Werkstücken bekannt, welche einen sichtbaren elektromagnetischen Anregungsstrahl auf einen gewünschten Meßpunkt auf der Werkstückoberfläche richtet und von dem Anregungsstrahl am Meßpunkt erzeugte Wärme in Form von Wärmestrahlung mittels einer Meßvorrichtung erfaßt. Ferner ist ein Justierlaser im sichtbaren Wellenlängenbereich vorgesehen, welcher noch eine zusätzliche Lichtstrahlung auf den Meßpunkt richtet.

Die US-A-4, 884,888 offenbart ein berührungsloses optisches Abstandsmeßverfahren, bei dem zwei Lichtstrahlen derart auf eine Werkstückoberfläche gerichtet werden, daß sie sich auf der Oberfläche schneiden, wenn ein vorgegebener Abstand eingestellt ist.

Der Erfindung liegt die Aufgabe zugrunde, ein Verfahren und eine Vorrichtung zum photothermischen Prüfen von Werkstücken anzugeben, mit denen eine zuverlässige Prüfung exakt an einem gewünschten Meßpunkt eines Werkstücks erfolgen kann.

Diese Aufgabe wird erfindungsgemäß durch ein Verfahren mit den Merkmalen von Anspruch 1 und eine Vorrichtung mit den Merkmalen von Anspruch 7 gelöst.

Mit dem erfindungsgemäßen Verfahren und der Vorrichtung ist es möglich, einen gewünschten Meßpunkt auf dem Werkstück sichtbar zu machen. Die Ortungsstrahlen werden so auf die Werkstückoberfläche gerichtet, daß dann, wenn sich das Werkstück, von der Meßvorrichtung aus gesehen, vor oder hinter einer Sollposition befindet, zwei Lichtpunkte auf der Werkstückoberfläche sichtbar sind, während genau in der Sollposition ein Lichtpunkt, nämlich der Schnittpunkt der Ortungsstrahlen im gewünschten Meßpunkt auf der Werkstückoberfläche sichtbar wird. Auf diese Weise ist eine sehr einfache Justierung des Abstandes von Werkstück und Meßvorrichtung und eine optische Kontrolle geschaffen, daß der Meßpunkt genau auf der gewünschten Stelle der Werkstückoberfläche liegt.

Dies ist z.B. vorteilhaft bei unregelmäßigen Werkstücken, bei denen die Messung an einer oder mehreren genau definierten Stellen der Werkstückoberfläche erfolgen soll.

Durch die Einstellung des Abstandes wird gleichzeitig die zurückgeworfenen Wärmestrahlung optimal ausgenutzt. Das Einstellen und Einhalten des richtigen Abstandes des Werkstückes von der Meßvorrichtung ist deshalb wichtig, weil die von dem Werkstück (bzw. von der Beschichtung, wie dem Pulver) abgegebene Wärmestrahlung in der Regel über eine Fokussierungsoptik, die sich in kurzem Abstand vor dem Detektor befindet, auf dem Detektor abgebildet wird. Die Fokussierungsoptik wird zwischengeschaltet, weil der eigentliche Detektor-Kristall (InSb; Indium-Antimonid) nur eine Größe im Millimeterbereich besitzt, andererseits aber die Strahlung aus einem größeren Raumwinkelbereich erfaßt werden soll, um die Intensität des Meßsignales zu erhöhen.

Damit die Fokussierungsoptik optimal arbeitet, ist es wünschenswert, daß der Detektor-Kristall exakt in einem Fokus der Fokussieroptik sitzt (was durch konstruktive Maßnahmen sichergestellt werden kann), und daß die Werkstückoberfläche exakt im anderen Fokus positioniert wird. Die Erfindung ermöglicht diese Positionierung.

Bei genauer Kenntnis des Abstandes von Werkstück zu Meßvorrichtung kann sich noch ein weiterer Vorteil ergeben. Wie in der Einleitung ausgeführt, beinhaltet die Meßinformation über das zu prüfende Werkstück einen Vektorbetrag und eine Phase, wobei der Betrag u.a. von dem Meßabstand abhängig ist. Da bei der Erfindung der Abstand des Meßpunkt zum Detektor auf einen gewünschten Wert einstellbar ist, kann die Information über diesen Abstand auch bei der Auswertung der von dem Detektor erfaßten Wärmestrahlung verwendet werden.

Gemäß einer bevorzugten Ausführungsform der Erfindung schließen die Ortungsstrahlen einen spitzen Winkel ein und werden symmetrisch zu einer Werkstück-Normalen auf die Werkstückoberfläche gerichtet. Diese Werkstück-Normale bzw. Symmetrieachse wird vorzugsweise in die Längsachse eines Detektors der Meßvorrichtung gelegt, um zu gewährleisten, daß der Meßpunkt den Detektormitteln präzise gegenüberliegt. Der Schnittpunkt der Ortungssstrahlen, und somit der gesuchte Meßpunkt, liegt bei einer vorteilhaften Variante dieser Erfindung im Fokus einer dem Detektor vorgeschalteten Fokussierungsoptik.

Besonders günstig ist es, wenn die Ortungsstrahlen von nur einer Quelle erzeugt werden, z.B. durch Aufteilen eines sichtbaren Laserstrahls in zwei Teilstrahlen. Dadurch kann die Anzahl der teureren Komponenten des Prüfsystems so gering wie möglich gehalten werden.

Bisher hatte man bei der photothermischen Schichtdickenmessung nach dem Stand der Technik stets den Anregungsstrahl kollinear mit den vom Werkstück abgestrahlten Detektorstrahlen (Wärmestrahlung) aufgebracht, d. h. in Richtung senkrecht zum Werkstück, ohne dabei die Meßstelle auf dem Werkstück sichtbar zu machen. Eine Kontrolle des Abstandes zwischen Detektor und Werkstück war nicht möglich. Gemäß einer bevorzugten Ausführungsform wird jedoch dieses Prinzip der Kollinearität aufgegeben, und der Anregungsstrahl wird mit einem spitzen Winkel auf die Werkstückoberfläche gerichtet. Wenn dann einer der Ortungsstrahlen dem Anregungsstrahl überlagert wird, können für die Strahlführung bereits vorhandene Komponenten eines optischen Umlenksystems zur Führung des Anregungsstrahls verwendet werden. Dadurch werden Redundanzen bei den Bauteilen vermieden. Der zweite Ortungsstrahl verläuft, wie gesagt, symmetrisch zum ersten.

Der Anregungsstrahl ist in der Regel ein intensitätsmodulierter unsichtbarer Laserstrahl im Infrarotbereich.

Man erhält ein besonders kompaktes System, wenn die Funktionen der Erzeugung und Lenkung der Ortungsstrahlen und der Erfassung der Wärmestrahlung in einem Meßkopf integriert sind; die Korrektur der Relativposition von Werkstück und Meßvorrichtung kann dann einfach durch Verschieben des Meßkopfes insgesamt und somit der Meßdurch Verschieben des Meßkopfes insgesamt und somit der Meßvorrichtung erfolgen.

Die Vorrichtung zur Durchführung diese Verfahrens weist vorzugsweise wenigstens einen Ortungs-Laser zum Erzeugen eines sichtbaren Laserstrahls auf, wobei die momentan bevorzugten Laser Diodenlaser oder He/Ne-Laser sind.

In der Regel umfaßt die Anregungsquelle einen Anregungs-Laser zum Erzeugen eines unsichtbaren Laserstrahls im Infrarotbereich, dessen Intensität von der optische Einrichtung moduliert wird. Vorzugsweise ist der Anregungs-Laser ein CO₂-Laser.

Bei einer besonders vorteilhaften Ausführungsform richtet ein optisches Umlenksystem die Ortungsstrahlen symmetrisch zu einer Werkstück-Normalen auf die Werkstückoberfläche, wobei aus den oben genannten Gründen vorzugsweise einer der Ortungsstrahlen dem Anregungsstrahl überlagert wird. Ferner kann vorgesehen sein, daß das optische Umlenksystem einen Strahlenteiler zum Aufteilen eines sichtbaren Laserstrahls in zwei Teilstrahlen aufweist, so daß nurein Laser als Quelle für die Ortungsstrahlen vorgesehen werden muß.

Eine besonders einfache Lösung zur Aufteilung eines einzigen sichtbaren Laserstrahls ist ein optisches Umlenksystem mit zwei parallelen 45°-Spiegel, von denen einer zu 50% durchlässig ist.

Wenn die Ortungsvorrichtung in der Meßvorrichtung integriert ist, kann die Verlagerungsvorrichtung eine Stelleinrichtung für die Korrektur der Position der Meßvorrichtung bezüglich des Werkstück aufweisen.

Die Vorrichtung und das Verfahren gemäß der vorliegenden Erfindung sind für die Schichtdickenmessung von Oberflächenbeschichtungen besonders geeignet.

Weitere Vorteile und Merkmale der vorliegenden Erfindung ergeben sich aus der folgenden detaillierten Beschreibung bevorzugter Ausführungsformen mit Bezug auf die Zeichnung. In den Figuren zeigen:
- Fig. 1: eine schematische Darstellung des "Zweipunktprinzips" der Erfindung, und
- Fig. 2: eine schematische perspektivische Darstellung einer Ausführungsform der Erfindung.

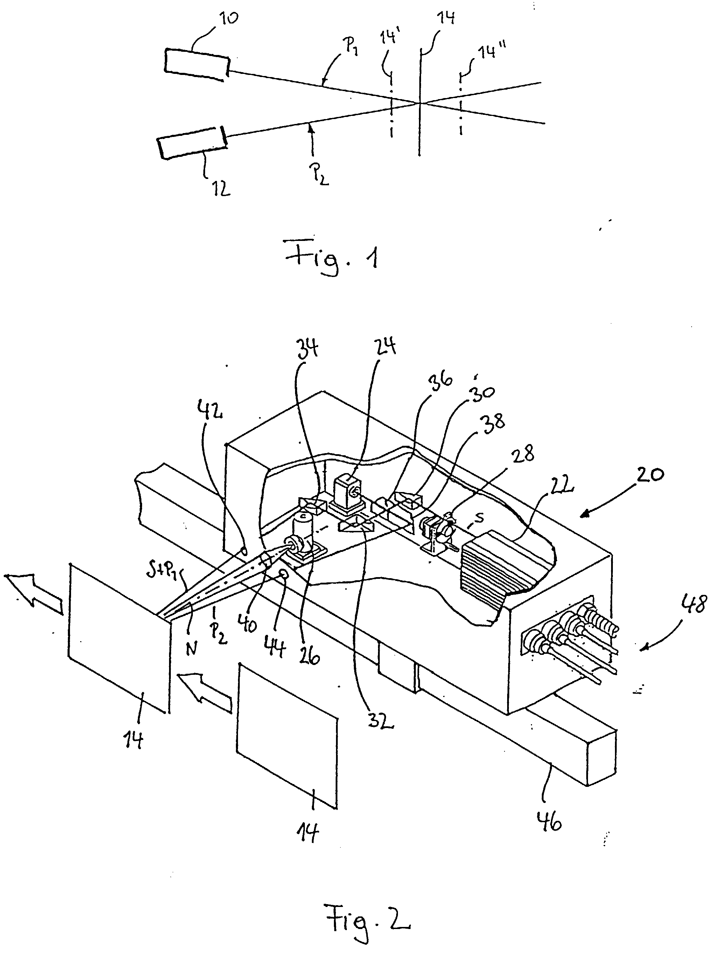

Figur 1 zeigt sehr shematisch anhand einer Prinzipskizze einen Aspekt der vorliegenden Erfindung.

Um bei dem Verfahren und der Vorrichtungen zum Prüfen von Werkstücken, und insbesondere zur Messung der Dicke einer Oberflächenbeschichtung des Werkstücks, den Meßpunkt genau in den Fokus einer Detektoreinrichtung zu legen, erzeugen zwei Lichtquellen 10, 12 zwei Ortungsstrahlen P₁ bzw. P₂, welche auf ein Werkstück 14 gerichtet sind und sich bei dem gesuchten Meßpunkt schneiden. Wenn sich nun das Werkstück 14 vor (14') oder hinter (14'') der Sollposition befindet, sind auf ihm zwei Lichtpunkte sichtbar, während genau in der Sollposition (14) nur ein Punkt sichtbar ist. Mit dieser Information ist eine einfache Justierung des Werkstückes bzw. der Werkstoffoberfläche möglich, so daß die Meßstelle im Fokus der Detektoreinrichtung liegt.

Als Ortungsstrahlen P₁, P₂ werden vorteilhaft sichtbare Laserstrahlen verwendet, wobei bei der bevorzugten Ausführungsform der Erfindung die Lichtquelle Diodenlaser oder He/Ne-Laser aufweist. Die Ortungsstrahlen schließen vorzugsweise einen relativ spitzen Winkel ein, z. B. im Bereich von 10 bis 45°, und sie sind weiter vorzugsweise symmetrisch zu einer Werkstück-Normalen ausgerichtet. Mit diesen Größenverhältnissen erhält man eine gute Auflösung der auf der Werkstückoberfläche abgebildeten Lichtpunkte.

Bei einer alternativen Ausführungsform werden die beiden sichtbaren Ortungsstrahlen P₁, P₂ mit unterschiedlicher Farbe erzeugt (z.B. rot und grün). Es ergibt sich dann zusätzlich die Information, ob sich das Werkstück vor oder hinter dem Schnittpunkt der Ortungsstrahlen, also vor oder hinter seiner Sollposition liegt, aus der Reihenfolge der auf der Werkstückoberfläche abgebildeten Punkte. Eine andere Möglichkeit, diese Information zu erhalten, wäre, den einen Ortungsstrahl periodisch zu unterbrechen (blinken). Allgemein gesagt, durch unterschiedliche Gestaltung der Ortungsstrahlen, kann auf der Werkstückoberfläche visualisiert werden, ob das Werkstück 14 vor oder hinter seiner Sollposition liegt.

Figur 2 zeigt eine Vorrichtung für die photothermische Schichtdickenmessung gemäß der vorliegenden Erfindung, wobei zur Verdeutlichung Teile der Vorrichtung weggebrochen sind.

Die in Figur 2 gezeigte Prüfvorrichtung weist einen Meßkopf 20 mit einer Anregungsquelle 22, einer Ortungslichtquelle 24 und einer Detektoreinrichtung 26 auf. In dem Meßkopf sind ferner eine Choppereinrichtung 28 und ein optisches Umlenksystem, das z.B. aus drei Prismen 30, 32, 34 oder zwei Spiegeln 36, 38 besteht, vorgesehen. Der Detektoreinrichtung 26 ist eine Fokussierungsoptik 40 vorgeschaltet. Der Meßkopf weist ferner zwei Öffnungen 42, 44 auf.

Der Meßkopf 20 ist beweglich auf einer Schiene 46 gelagert, und er liegt bei dieser Ausführungsform den Werkstücken 14 mit einem Abstand von ungefähr einem Meter gegenüber. Eine Stelleinrichtung zur Verlagerung des Meßkopfes 20 ist in der Figur nicht dargestellt. Sie kann zweckmäßig an der Schiene 46 vorgesehen werden. Der Meßkopf 20 weist Anschlüsse 48 zum Zuführen von Versorgungsleistung und Steuersignalen und zum Abgeben von Meßsignalen auf.

Der Betrieb der in Figur 2 gezeigten Vorrichtung ist wie folgt. Die Werkstücke 14 werden in Pfeilrichtung in einem Abstand von etwa einem Meter an dem Meßkopf 20 vorbeibewegt. Dieser Meßkopf sendet, in der Zeichnung von rechts, aus der Anregungsquelle 22 über den Chopper 28 einen Anregungsstrahl S. Der Anregungsstrahl S ist bei dieser Ausführungsform ein unsichtbarer CO₂-Laserstrahl, der von dem Chopper oder "Ventilatorrad", mit dunklen Barrierestellen und hellen Durchlaßstellen, moduliert wird. Es entsteht ein periodisch unterbrochener "Heizstrahl", der über ein Umlenksystem mit drei Prismen 30, 32, 34 umgelenkt, durch die Öffnung 42 in dem Meßkopf 20 geführt und unter einem spitzen Winkel auf die Oberfläche des Werkstückes gerichtet wird. Von dem Werkstück wird durch die lokale Erhitzung abgestrahlte Wärme mit höchster Intensität, senkrecht vom Werkstück zurück in einen vertikalen zylindrischen Detektor 26 des Mekopfes 20 gestrahlt, der die Intensität der Wärmestrahlung und damit die Schichtdicke einer Werkstückbeschichtung in an sich bekannter Weise mißt. Zwischen dem Werkstück 14 und dem Detektor 26 ist eine Fokussierungsoptik 40 angeordnet, welche die von dem Werkstück 14 abgegebene Wärmestrahlung bündelt und auf den sehr kleinen Detektorkristall in der Detektoreinrichtung 26 fokussiert.

Um eine optimale Auswertung der von dem Werkstück 14 abgegebenen Wärmestrahlung zu erreichen, muß der Anregungsstrahl S das Werkstück 14 in oder sehr nahe bei einem genau lokalisierten Meßpunkt mit einem definierten Abstand zur Detektoreinrichtung 26 treffen. Die genaue Einstellung der Relativposition von Werkstück 14 und Meßkopf 20 wird mit einer Ortungsvorrichtung und einer Verlagerungsvorrichtung erreicht.

Bei photothermischen Schichtdicken-Meßeinrichtungen nach dem Stand der Technik war bisher der Meßpunkt, d. h. der Punkt, bei dem der Anregungsstrahl auf die Werkstückoberfläche trifft, nicht sichtbar, weil für die Anregung in der Regel eine unsichtbare Wärmestrahlung, z. B. von einem CO₂-Laser verwendet wurde. Es war somit schwierig, den gewünschten Meßpunkt, und insbesondere den gewünschten Meßabstand von Werkstück 14 und Meßkopf 20 zu lokalisieren und einzustellen.

Bei der in Figur 2 gezeigten Vorrichtung für die Schichtdickenmessung ist eine Lichtquelle 24, vorzugsweise ein Diodenlaser oder ein Helium/Neon-Laser (He/Ne-Laser), vorgesehen, deren sichtbarer Ausgangsstrahl über ein optisches Umlenksystem in zwei sichtbare Ortungsstrahlen P₁, P₂ aufgeteilt wird. Hierzu sind zwei parallele 45°-Spiegel dem Lichtaustritt des Lasers 24 gegenüberliegend angeordnet, von denen der erste, 36, zu 50 % lichtdurchlässig ist und der zweite, 38, den durch den ersten Spiegel 36 hindurchtretenden "Reststrahl" vollständig reflektiert. Der erste 45°-Spiegel 36 ist ferner von seiner Rückseite her für die IR-Strahlung des Anregungslasers 22 durchlässig.

Das Umlenksystem aus den beiden 45°-Spiegeln 36, 38 ist so angeordnet, daß der erste Teilstrahl, der dem ersten Ortungsstrahl P₁ entspricht, dem modulierten Anregungsstrahl S überlagert wird und gemeinsam mit diesem in einem spitzen Winkel auf die Werkstückoberfläche gerichtet wird. Der zweite Teilstrahl, der dem Ortungsstrahl P₂ entspricht, wird bezüglich einer Werkstück-Normalen spiegelbildlich zum ersten Teilstrahl auf das Werkstück gestrahlt. Diese Werkstück-Normale oder Spiegelachse verläuft kollinear zu einer Erfassungsachse N des Detektors 26.

Ist der Abstand zwischen Meßkopf 20 und Werkstück 14 zu klein oder zu groß, so erscheinen auf dem Werkstück zwei Lichtpunkte. Durch eine Verstellung der Position des Meßkopfes 20 relativ zu dem Werkstück 14 über die Schiene 46 bzw. die (nicht gezeigte) Stelleinrichtung wird erreicht, daß die Lichtpunkte der Ortungsstrahlen P₁ und P₂ zusammenfallen, und daß somit auch der "Treffpunkt" des unsichtbaren Laserstrahls S bei diesem Schnittpunkt liegt und der gesuchte Meßpunkt auf dem Werkstück visualisiert wird und überprüft werden kann.

Selbst wenn sich sichtbares Licht als Anregungsstrahlung eignete, könnte mit der Projektion eines einzelnen, zur Wärmestrahlung kollinearen Anregungsstrahls auf die Werkstückoberfläche nach dem Stand der Technik, die genaue räumliche Lage des Meßpunktes auf dem Werkstück nicht kontrolliert werden. Indem gemäß dem Verfahren und der Vorrichtung dieser Erfindung die zwei erläuterten Ortungsstrahlen P₁ und P₂ so auf das Werkstück gerichtet werden, daß ein gesuchter Meßpunkt bei dem Schnittpunkt der Ortungsstrahlen liegt, sowie durch eine Korrektur des Abstandes zwischen Werkstück und Meßkopf läßt sich die gesuchte Meßstelle genau auf dem Werkstück visualisieren und einstellen. Falls, wie oben erwähnt, auch sichtbares Licht als Anregungsstrahlung geeignet ist, kann bei einer alternativen Ausführungsform der Erfindung der Anregungsstrahl selbst in zwei Teilstrahlen aufgeteilt werden, die so wie die Ortungsstrahlen P₁, P₂ auf das Werkstück gerichtet werden, um dort einerseits eine Erwärmung des Werkstückes zu bewirken und andererseits den Meßpunkt oder "Treffpunkt" zu visualisieren. Der Anregungsstrahl S hat dann die doppelte Funktion der thermischen Anregung des Werkstückes und der Visualisierung des Meßpunktes.

Selbstverständlich ist die vorliegende Erfindung nicht auf die in Figur 2 gezeigte Vorrichtung zur photothermischen Schichtdickenmessung beschränkt. Wenn z.B. ein Meßsysten einen Anregungsstrahl gleichzeitig auf zwei oder mehr unterschiedliche Prüfstellen einer Werkstoffoberfläche richtet, ist es zweckmäßig, entweder mehrere Lichtquellen oder zusätzliche Strahlenteiler vorzusehen, um eine ausreichende Anzahl von Ortungsstrahlen (zwei für jeden Teil-Anregungsstrahl, der auf eine Meßstelle trifft) zu erzeugen.

Die in der vorstehenden Beschreibung, den Figuren und den Ansprüchen definierten Merkmale können sowohl einzeln als auch in beliebiger Kombination für die Verwirklichung der Erfindung wesentlich sein.

## Patentansprüche

1. Verfahren zum photothermischen Prüfen von Werkstücken (14), bei dem
ein nicht sichtbarer elektromagnetischer Anregungsstrahl (S) auf einen gewünschten Meßpunkt auf der Werkstückoberfläche gerichtet wird und von dem Anregungsstrahl im Meßpunkt erzeugte Wärme in Form von Wärmestrahlung mittels einer Meßvorrichtung (20) erfaßt und ausgewertet wird, und
zwei sichtbare, in einem Schnittpunkt sich schneidende Ortungsstrahlen (P₁, P₂) auf die Werkstückoberfläche gerichtet werden, wobei die Ortungsstrahlen so ausgerichtet sind, daß der Schnittpunkt der Ortungsstrahlen auf der Werkstückoberfläche mit dem Meßpunkt zusammenfällt, wenn zwischen der Meßvorrichtung (20) und der Werkstückoberfläche ein vorgegebener Meßabstand eingestellt ist, bei dem die Wärmestrahlung auf die Meßvorrichtung fokussiert wird.

2. Verfahren nach Anspruch 1, dadurch **gekennzeichnet,** daß die Ortungsstrahlen (P₁, P₂) einen spitzen Winkel einschließen.

3. Verfahren nach Anspruch 1 oder 2, dadurch **gekennzeichnet,** daß die Ortungsstrahlen (P₁, P₂) symmetrisch zu einer Werkstück-Normalen (N) auf die Werkstückoberfläche gerichtet werden.

4. Verfahren nach einem der vorangehenden Ansprüche, dadurch **gekennzeichnet,** daß die Ortungsstrahlen (P₁, P₂) durch Aufteilen eines sichtbaren Laserstrahls in zwei Teilstrahlen erzeugt werden.

5. Verfahren nach einem der vorangehenden Ansprüche, dadurch **gekennzeichnet,** daß einer der Ortungsstrahlen (P₁) dem Anregungsstrahl (S) überlagert wird.

6. Verfahren nach einem der vorangehenden Ansprüche, dadurch **gekennzeichnet,** daß der Anregungsstrahl (S) ein intensitätsmodulierter unsichtbarer Laserstrahl im Infrarotbereich ist.

7. Verfahren nach einem der vorangehenden Ansprüche, dadurch **gekennzeichnet,** daß die Ortungsstrahlen (P₁, P₂) von der Meßvorrichtung (20) ausgesandt werden und die Relativposition von Werkstück (14) und Meßvorrichtung (20) durch Verschieben der Meßvorrichtung (20) eingestellt wird.

8. Vorrichtung zum photothermischen Prüfen von Werkstücken, mit einer Meßvorrichtung (20) umfassend
eine Anregungsquelle (22) zum Abgeben eines nicht sichtbaren elektromagnetischen Anregungsstrahls (S),
eine optische Einrichtung (30 - 38), welche den Anregungsstrahl auf einen Meßpunkt auf der Werkstückoberfläche richtet,
eine Detektorvorrichtung (26) zum Erfassen der von dem Werkstück abgegebenen Wärmestrahlung,
eine Fokussieroptik (40), welche die Wärmestrahlung auf die Detektorvorrichtung (26) fokussiert,
eine Ortungsvorrichtung, die zwei sichtbare, in einem Schnittpunkt sich schneidende Ortungsstrahlen (P₁, P₂) erzeugt, wobei die optische Einrichtung (30 - 38) die Ortungsstrahlen auf die Werkstückoberfläche richtet, und
eine Verlagerungsvorrichtung (46) zum Einstellen des Abstandes zwischen der Meßvorrichtung (20) und dem Werkstück (14) derart, daß der Schnittpunkt der Ortungsstrahlen auf der Werkstückoberfläche zu liegen kommt und mit dem Meßpunkt zusammenfällt, wenn zwischen der Detektorvorrichtung (20) und der Werkstückoberfläche ein vorgegebener Meßabstand eingestellt ist, bei dem die Wärmestrahlung von der Fokussiervorrichtung (40) auf die Detektorvorrichtung (20) fokussiert wird.

9. Vorrichtung nach Anspruch 8, dadurch **gekennzeichnet,** daß die Ortungsvorrichtung wenigstens einen Ortungs-Laser (24) zum Erzeugen eines sichtbaren Laserstrahls aufweist.

10. Vorrichtung nach Anspruch 9, dadurch **gekennzeichnet,** daß der Ortungs-Laser (24) ein Diodenlaser oder ein He/Ne-Laser ist.

11. Vorrichtung nach einem der Ansprüche 8 bis 10, dadurch **gekennzeichnet,** daß die Anregungsquelle (22, 28) einen Anregungs-Laser (22) zum Erzeugen eines Laserstrahls im Infrarotbereich und Modulationsmittel (28) zum Modulieren der Intensität des Anregungsstrahls (S) aufweist.

12. Vorrichtung nach Anspruch 11, dadruch **gekennzeichnet,** daß der Anregungs-Laser (22) ein CO₂-Laser ist.

13. Vorrichtung nach einem der Ansprüche 8 bis 12, dadurch **gekennzeichnet,** daß die optische Einrichtung (30 - 38) die Ortungsstrahlen (P₁, P₂) symmetrisch zu einer Werkstück-Normalen (N) auf die Werkstückoberfläche richtet.

14. Vorrichtung nach einem der Ansprüche 8 bis 13, dadurch **gekennzeichnet,** daß die optische Einrichtung einen (P₁) der Ortungsstrahlen (P₁, P₂) dem Anregungsstrahl (S) überlagert.

15. Vorrichtung nach einem der Ansprüche 7 bis 14, dadurch **gekennzeichnet,** daß die optische Einrichtung (30 - 38) einen Strahlteiler (36) zum Aufteilen eines sichtbaren Laserstrahls in zwei Teilstrahlen (P₁, P₂) aufweist.

16. Vorrichtung nach Anspruch 15, dadurch **gekennzeichnet,** daß die optische Einvorrichtung (30 - 38) zwei parallele 45°-Spiegel (36, 38) aufweist, von denen einer zu 50% durchlässig ist.

17. Vorrichtung nach einem der Ansprüche 8 bis 16, **gekennzeichnet,** durch eine Stelleinrichtung zur Korrektur der Position der Meßvorrichtung (20) relativ zum Werkstück (14).

18. Verwendung des Verfahrens nach einem der Ansprüche 1 bis 7 zur Schichtdickenmessung einer Werkstückbeschichtung.

19. Verwendung der Vorrichtung nach einem der Ansprüche 8 bis 17 zur Schichtdickenmessung einer Werkstückbeschichtung.

## Claims

1. Method of photothermally testing workpieces (14), comprising the steps of:
directing a non-visible electromagnetic excitation beam (S) to a desired measuring point on the workpiece surface;
detecting and evaluating heat in the form of thermal radiation generated at said measuring point by said excitation beam by means of a measuring means (20);
directing two visible locating beams (P₁, P₂) to the workpiece surface, said locating beams intersecting at a point of intersection, wherein said locating beams are oriented so that said point of intersection of said location beams and the measuring point coincide on the workpiece surface, when a predetermined measuring distance is set between the measuring means (20) and the workpiece surface at which the thermal radiation is focussed on the measuring means.

2. Method according to claim 1, characterized in that the locating beams (P₁, P₂) define an acute angle.

3. Method according to claim 1 or 2, characterized in that the locating beams (P₁, P₂) are directed to the workpiece surface symmetrically to a normal line (N) of the workpiece.

4. Method according to one of the preceding claims, characterized in that the locating beams (P₁, P₂) are generated by separating a visible laser beam into two partial-beams.

5. Method according to one of the preceding claims, characterized in that one of said locating beams (P₁) is superimposed on the excitation beam (S).

6. Method according to one of the preceding claims, characterized in that the excitation beam (S) is an intensity modulated invisible laser beam in the infrared range.

7. Method according to one of the preceding claims, characterized in that the locating beams (P₁, P₂) are emitted by the measuring means (20) and the relative position between the workpiece (14) and the measuring means (20) is adjusted by moving said measuring means (20).

8. Device for photothermally testing workpieces, including measuring means (20) comprising:
an excitation source (28) for outputting a non-visible electromagnetic excitation beam (S);
optical means (30-38) for directing the excitation beam to a measuring point on the workpiece surface;
detector means (26) for detecting thermal radiation emitted from the workpiece;
a focussing optic (40) for focussing said thermal radiation on said detector means (26);
locating means for producing two visible locating beams (P₁, P₂), which intersect at a point of intersection,
wherein said optical means (30-38) directs said locating beams to the workpiece surface; and
displacement means (46) for adjusting the distance between the measuring means (20) and the workpiece (14) so that the point of intersection coincides with the measuring point on the workpiece surface when a predetermined measuring distance is set between the detector means (20) and the workpiece surface, at which the thermal radiation is focussed on the detector means (20) by the focussing means (40).

9. Device according to claim 8, characterized in that the locating means comprises at least one locating laser (24) for generating a visible laser beam.

10. Device according to claim 9, characterized in that the locating laser (24) is a diode laser or an He/Ne laser.

11. Device according to one of claims 8 to 10, characterized in that said excitation source (22, 28) comprises an excitation laser (22) for generating an laser beam in the infrared range and modulation means (28) for modulating the intensity of said excitation beam (S).

12. Device according to claim 11, wherein said excitation laser (22) is a CO₂ laser.

13. Device according to one of claims 8 to 12, characterized in that said optical means directs said locating beams (P₁, P₂) to the workpiece surface symmetrically to a normal line (N) of the workpiece.

14. Device according to one of claims 8 to 13, characterized in that said optical means superimposes one (P₁) of said locating beams (P₁, P₂) and said excitation beam (S).

15. Device according to one of claims 8 or 14, characterized in that said optical means (30-38) comprises a beam splitter (36) for separating a visible laser beam into two partial-beams (P₁, P₂).

16. Device according to claim 15, wherein said optical means (30-38) comprises two parallel 45° mirrors (36, 38) one of the mirrors being 50 % transparent.

17. Device according to one of claims 8 to 16, characterized by actuator means for correcting the position of said measuring means (20) relative to the workpiece (14).

18. Use of the method according to one of claims 1 to 7 for measuring the thickness of a workpiece coating.

19. Use of the device according to one of claims 8 to 17 for measuring the thickness of a workpiece coating.

## Revendications

1. Procédé d'examen photothermique de pièces à usiner (14), dans lequel un rayon d'excitation électromagnétique (S) invisible est orienté sur un point de mesure voulu à la surface de la pièce et la chaleur produite par le rayon d'excitation au point de mesure est détectée sous la forme d'un rayonnement thermique au moyen d'un dispositif de mesure (20) et est évaluée, et dans lequel deux rayons de repérage (P₁, P₂) visibles, se coupant en un point d'intersection, sont dirigés sur la surface de la pièce à usiner, les rayons de repérages étant orientés de manière que le point d'intersection des rayons de repérage sur la surface de la pièce coïncide avec le point de mesure, lorsqu'entre le dispositif de mesure (20) et la surface de la pièce est réglée une distance de mesure donnée, pour laquelle le rayonnement thermique est focalisé sur le dispositif de mesure.

2. Procédé selon la revendication 1, caractérisé en ce que les rayons de repérage (P₁, P₂) enferment un angle aigu.

3. Procédé selon la revendication 1 ou 2, caractérisé en ce que les rayons de repérage (P₁, P₂) sont dirigés sur la surface de la pièce, symétriquement à une normale (N) à la pièce.

4. Procédé selon l'une des revendications précédentes, caractérisé en ce que les rayons de repérage (P₁, P₂) sont produits par division d'un rayon laser visible en deux rayons partiels.

5. Procédé selon l'une des revendications précédentes, caractérisé en ce que l'un des rayons de repérage (P₁) est superposé au rayon d'excitation (S).

6. Procédé selon l'une des revendications précédentes, caractérisé en ce que le rayon d'excitation (S) est un rayon laser invisible dans le domaine infrarouge modulé en intensité.

7. Procédé selon l'une des revendications précédentes, caractérisé en ce que les rayons de repérage (P₁, P₂) sont émis par le dispositif de mesure (20) et la position relative de la pièce à usiner (14) et du dispositif de mesure (20) est réglé par translation du dispositif de mesure (20).

8. Dispositif d'examen photothermique de pièces à usiner, comportant un dispositif de mesure (20) comprenant
une source d'excitation (22) destinée à fournir un rayon d'excitation électromagnétique (S) invisible,
un dispositif optique (30 à 38), qui dirige le rayon d'excitation sur un point de mesure de la surface de la pièce,
un dispositif à détecteur (26) destiné à détecter le rayonnement thermique fourni par la pièce,
une optique de focalisation (40), qui focalise le rayonnement thermique sur le dispositif à détecteur (26),
un dispositif de repérage, qui produit deux rayons de repérage (P₁, P₂) visibles, se coupant en un point d'intersection, le dispositif optique (30 à 38) dirigeant les rayons de repérage sur la surface de la pièce et
un dispositif de déplacement (46) destiné à régler la distance entre le dispositif de mesure (20) et la pièce (14), de manière que le point d'intersection des rayons de repérage vienne se trouver sur la surface de la pièce et coïncide avec le point de mesure, lorsqu'entre le dispositif de mesure (20) et la surface de la pièce est réglée une distance de mesure donnée, pour laquelle le rayonnement thermique est focalisé sur le dispositif de mesure.

9. Dispositif selon la revendication 8, caractérisé en ce que le dispositif de repérage comporte au moins un laser de repérage (24) destiné à produire un rayon laser visible.

10. Dispositif selon la revendication 9, caractérisé en ce que le laser de repérage (24) est un laser à diode ou un laser He/Ne.

11. Dispositif selon l'une des revendications 8 à 10, caractérisé en ce que la source d'excitation (22, 28) comporte un laser d'excitation (22) destiné à produire un rayon laser dans le domaine infrarouge ainsi que des moyens de modulation (28) destinés à moduler l'intensité du rayon d'excitation (S).

12. Dispositif selon la revendication 11, caractérisé en ce que le laser d'excitation (22) est un laser à CO₂.

13. Dispositif selon l'une des revendications 8 à 12, caractérisé en ce que le dispositif optique (30 à 38) dirige les rayons de repérage (P₁, P₂) sur la surface de la pièce symétriquement à une normale (N) à la pièce.

14. Dispositif selon l'une des revendications 8 à 13, caractérisé en ce que le dispositif optique superpose l'un (P1) des rayons de repérage (P₁, P₂) au rayon d'excitation (S).

15. Dispositif selon l'une des revendications 8 à 14, caractérisé en ce que le dispositif optique (30 à 38) comporte un diviseur de rayon (36) destiné à diviser un rayon laser visible en deux rayons partiels (P₁, P₂).

16. Dispositif selon la revendication 15, caractérisé en ce que le dispositif optique (30 à 38) comporte deux miroirs à 45° (36, 38) parallèles, dont un est transparent à 50 %.

17. Dispositif selon l'une des revendications 8 à 16, caractérisé par un dispositif de réglage pour la correction de la position du dispositif de mesure (20) par rapport à la pièce à usiner (14).

18. Mise en oeuvre du procédé selon l'une des revendications 1 à 7, pour la mesure de l'épaisseur de la couche d'un revêtement de la pièce.

19. Mise en oeuvre du dispositif selon l'une des revendications 8 à 17, pour la mesure de l'épaisseur de la couche d'un revêtement de la pièce.
